(19) **Europäisches Patentamt**

**European Patent Office**

**Office européen des brevets**

(11) **EP 0 761 836 B1**

(12) **EUROPEAN PATENT SPECIFICATION**

(45) Date of publication and mention
of the grant of the patent:
**01.10.2003 Bulletin 2003/40**

(51) Int Cl.[7]: **C22C 38/44**, C22C 38/46,
C22C 38/48, F01D 5/06

(21) Application number: **96115660.1**

(22) Date of filing: **01.02.1990**

(54) **Heat resisting steel and turbine rotor**

Hitzebeständiger Stahl- und Turbinenrotor

Acier réfractaire et rotor de turbine

(84) Designated Contracting States:
**CH DE FR GB LI**

(30) Priority: **03.02.1989 JP 2389089**
**22.05.1989 JP 12662289**

(43) Date of publication of application:
**12.03.1997 Bulletin 1997/11**

(62) Document number(s) of the earlier application(s) in
accordance with Art. 76 EPC:
**90102007.3 / 0 384 181**

(73) Proprietor: **Hitachi, Ltd.**
**Chiyoda-ku, Tokyo 101 (JP)**

(72) Inventors:
• **Siga, Masao**
**Hitachi-shi (JP)**
• **Fukui, Yutaka**
**Hitachi-shi (JP)**
• **Kuriyama, Mitsuo**
**Naka-gun, Ibaraki-ken (JP)**
• **Maeno, Yoshimi**
**Hitachi-shi (JP)**
• **Suwa, Masateru**
**Naka-gun, Ibaraki-ken (JP)**
• **Kaneko, Ryoichi**
**Hitachi-shi (JP)**
• **Onoda, Takeshi**
**Hitachi-shi (JP)**
• **Kajiwara, Hidefumi**
**Katsuta-shi (JP)**
• **Watanabe, Yasuo**
**Katsuta-shi (JP)**
• **Takahashi, Shintaro**
**Hitachi-shi (JP)**
• **Tan, Toshimi**
**Katsuta-shi (JP)**

(74) Representative: **Beetz & Partner Patentanwälte**
**Steinsdorfstrasse 10**
**80538 München (DE)**

(56) References cited:
**EP-A- 0 225 425**      **EP-A- 0 237 170**

• **PATENT ABSTRACTS OF JAPAN vol. 010, no. 339 (C-385), 15 November 1986 & JP 61 143523 A (TOSHIBA CORP), 1 July 1986,**
• **PATENT ABSTRACTS OF JAPAN vol. 010, no. 094 (C-338), 11 April 1986 & JP 60 224766 A (TOSHIBA KK), 9 November 1985,**
• **BROWN BOVERI REVIEW, no. 5, 1980, BADEN,CH, pages 227-291, XP002021123 HAUSERMANN ET AL: "Steam turbines of medium output etc..."**
• **REVUE ALSTHOM, vol. 12, 1988, PARIS,FR, page 3-17 XP002021124 VIALLIS,J: "65 mw fossil-fiel power plants."**

**Description**

The invention relates to a heat resisting Ni-Cr-Mo-V low alloy steel having superior high temperature strength and toughness.

In general, Cr-Mo-V steel specified in accordance with ASTM (Designation: A470-84, Class 8) is used as a material of a high pressure rotor exposed to high temperature steam (steam temperature: about 538°C) and 3.5 Ni-Cr-Mo-V steel specified in accordance with ASTM (Designation: A470-84, Class 7) is used as a material of a low pressure (steam temperature: about 100°C) rotor. The former Cr-Mo-V steel is superior in high temperature strength, but inferior in low temperature toughness. The latter 3.5 Ni-Cr-Mo-V steel is superior in low temperature toughness, but inferior in high temperature strength.

A turbine having a large capacity comprises a high pressure portion, an intermediate pressure portion, and a low pressure portion in accordance with the steam conditions thereof, and high and intermediate pressure rotors are fabricated from Cr-Mo-V steel and a low pressure rotor is fabricated from 3.5 Ni-Cr-Mo-V steel.

Turbines having a small capacity less than 100,000 and an intermediate capacity of 100,000 to 300,000 KW have a rotor small in size and thus if a material having both the advantages of the above materials used in the high and low pressure rotors is available, the high and the low pressure portions thereof can be integrated (fabricated from the same material). This integration makes the turbine compact as a whole and the cost thereof is greatly reduced. Examples of materials of the rotor integrating high and low pressure portions are disclosed in the JP-B 58-11504, the JP-A 54-40225 and the JP-A 60-224766.

If the high and low pressure portions are integrated by using the currently available rotor materials, i.e., Cr-Mo-V steel or Ni-Cr-Mo-V steel, the former cannot provide safety against the brittle fracture of the low pressure portion, because it is inferior in low temperature toughness, while the latter cannot provide safety against the creep fracture of the high pressure portion because it is inferior in high temperature strength.

The JP-B. 58-11504 discloses a rotor integrating high and low pressure portions fabricated from a material consisting, by weight, of 0.15 to 0.3% C, not more than 0.1% Si, not more than 1.0% Mn, 0.5 to 1.5% Cr, 0.5 to 1.5% Ni, not more than 1.5% but more than 0.5% Mo, 0.15 to 0.30% V, 0.01 to 0.1% Nb, and the balance Fe, but it does not exhibit sufficient toughness after heated at a high temperature for a long time and thus long blades having a length not less than 762 mm cannot be planted thereon.

The JP-A 60-224766 discloses a steam turbine rotor fabricated from a material consisting, by weight, of 0.10 to 0.35% C, not more than 0.10% Si, not more than 1.0% Mn, 1.5 to 2.5% Ni, 1.5 to 3.0% Cr, 0.3 to 1.5% Mo, 0.05 to 0.25% V, and the balance Fe, and further discloses that this material may contain 0.01 to 0.1% Nb, and 0.02 to 0.1% N. This rotor, however, is inferior in creep rupture strength.

The JP-A 62-189301 discloses a steam turbine integrating high and low pressure portions, which, however, uses a rotor shaft fabricated by mechanically combining a material superior in high temperature strength but inferior in toughness and a material superior in toughness but inferior in high temperature strength, and thus it is not fabricated from a material having the same component. This mechanical combination requires a large structure to obtain strength and thus the rotor shaft cannot be made small in size and, in addition, the reliability is impaired.

An object of the invention is to provide a heat resisting steel having superior high temperature strength and less heating embrittlement.

A heat resisting Ni-Cr-Mo-V low alloy steel according to the invention having superior high temperature strength and toughness and less heating embrittlement is defined in claim 1.

A steam turbine rotor shaft according to claim 3 is fabricated from said Ni-Cr-Mo-V low alloy steel. The temperature at the steam inlet of the steam turbine is not less than 530°C and the temperature of the steam outlet thereof is not more than 100°C. At least the blades provided at the final stage thereof have a length not less than 762 mm. The rotor shaft is provided at the center thereof with FATT of a temperature not more than the steam outlet temperature and has a 100,000 hour creep rupture strength not less than 108 N/mm$^2$ (11 kg /mm$^2$), more preferably not less than 118 N/mm$^2$ (12 kg /mm$^2$), at a temperature not more than the above steam inlet temperature at 538°C, and a V-shaped notch impact value of not less than 3.0 kgf. m/cm$^2$ after the rotor shaft has been heated at 500°C for 1,000 hours. (1 U8fm = 1Kpm = 9.81 Nm = 9.817)

In the heat resisting Ni-Cr-Mo-V low alloy steel of the invention the ratio (V + Mo)/(Ni + Cr) is 0.45 to 0.7, and also a rotor shaft integrating high and low pressure portions which rotor shaft is made of said Ni-Cr-Mo-V low ally steel.

The heat resisting Ni-Cr-Mo-V low alloy steels of the invention can comprise at least one element selected from the group consisting of 0.005 to 0.15% Nb, 0.005 to 0.15% Ta, 0.001 to 0.1% Al, 0.001 to 0.1% Zr, 0.001 to 0.1% Ca, 0.001 to 0.1% rare earth elements, 0.1 to 1.0% W, 0.001 to 0.1% Ti, 0.001 to 0.1% B, wherein a ratio (V + Mo)/(Ni + Cr) is 0.45 to 0.7.

Rotor shafts made of this alloy steel are applied to a steam turbine, according to the present invention.

Further, an amount of oxygen contained in the above Ni-Cr-Mo-V low alloy steels is preferably not more than 100 ppm as said out in claim 2.

A method of manufacturing the Ni-Cr-Mo-V steel having the composition described above comprises the steps of forming a steel ingot thereof particularly by melting the ingot by electroremelting or in an arc furnace under an atmospheric air and then by deoxidizing the same through carbon under vacuum, hot forging the steel ingot, quenching the steel ingot in such a manner that it is heated to an austenizing temperature and then cooled at a predetermined cooling speed, and annealing the steel ingot, the Ni-Cr-Mo-V steel mainly having a bainite structure.

Preferably, the quenching temperature is 900 to 1000°C and an annealing temperature is 630 to 700°C.

[Operation]

The component of the low alloy steel constituting the steam turbine rotor of the present invention and the reason why heat treatment conditions are limited are explained below.

Carbon is an element necessary to improve quenching ability and to obtain strength. When an amount thereof is not more than 0.15%, sufficient quenching ability cannot be obtained and a soft ferritic structure occurs about the center of the rotor, so that sufficient tensile strength and yield strength can not be obtained. When a content thereof is not less than 0.4%, it reduces toughness. Thus, the carbon is limited to a range from 0.20 to 0.28%.

Although silicon and manganese are conventionally added as a deoxidizer, a rotor superior in quality can be produced without the addition thereof when a steel making technology such as a vacuum carbon deoxidation method or an electro-slug melting method is used. A content of Si and Mn must be made as low as possible from a view point that the rotor is made brittle when it is operated for a long time, and thus the amounts thereof are limited to not more than 0.1% and 0.5%, respectively, and in particular, $Si \leqq 0.05\%$ and $Mn \leqq 0.25\%$ are preferable and $Mn \leqq 0.15\%$ is more preferable. Mn not less than 0.05% acts as a desulfurizing agent and is necessary to enhance hot workability. Thus, the lower limit of Mn is 0.05%.

Nickel is indispensable to improve quenching ability and toughness. A content thereof less than 1.5% is not sufficient to obtain an effect for improving toughness. An addition of a large amount thereof exceeding 2.5% lowers creep rupture strength. In particular, the amount thereof is in a range from 1.6 to 2.0%.

Chromium improves quenching ability, toughness, and strength, and also improves corrosion resistance in steam. A content thereof less than 0.8% is not sufficient to exhibit an effect for improving them, and an addition thereof exceeding 2.5% lowers creep rupture strength. In particular, preferably an content thereof is in a range from 1.2 to 1.9%.

Molybdenum precipitates fine carbide in crystal grains while an annealing processing is carried out, with a result that it has an effect for improving high temperature strength and preventing embrittlement caused by annealing. A content thereof less than 0.8% is not sufficient to exhibit this effect, and an addition of a large amount thereof exceeding 2.5% reduces toughness. In particular, preferably a content thereof is in a range from 1.2 to 1.5% from a view point of toughness and preferably a content thereof is in a range exceeding 1.5% but not more than 2.0% from a view point of strength.

Vanadium precipitates fine carbide in crystal grains while an annealing processing is carried out with a result that it has an effect for improving high temperature strength and toughness. A content thereof less than 0.1% is not sufficient to exhibit this effect, but an addition thereof exceeding 0.3% saturates the effect. In particular, therefore the V-content is limited to 0.2-0.3 and is preferably in the pourpe of 0.20% to 0.5%.

It has been experimentally clarified that the above-mentioned nickel, chromium, vanadium, and molybdenum are greatly concerned with toughness and high temperature strength and act in combination in the invented steel. More specifically, to obtain a material superior in both high temperature strength and low temperature toughness, a ratio of a sum of vanadium and molybdenum, which are carbide creating elements and which have an effect for improving high temperature strength, to a sum of nickel and chromium, which have an effect for improving quenching ability and toughness, preferably satisfies the equation $(V + Mo)/(Ni + Cr) = 0.45$ to 0.7.

When low alloy steel composed of the above component is manufactured, an addition of any of rare earth elements, calcium, zirconium, and aluminum improves the toughness thereof. An addition of rare earth elements less than 0.005% is not sufficient to exhibit an effect for improving the toughness, but an addition thereof exceeding 0.4% saturates the effect. Although an addition of a small amount of Ca improves the toughness, an amount thereof less than 0.0005% does not exhibit an effect for improvement, but an addition thereof exceeding 0.01% saturates the effect. An addition of Zr less than 0.01% is not sufficient to exhibit an effect for improving the toughness, but an addition thereof exceeding 0.2% saturates the effect. An addition of Al less than 0.001% is not sufficient to exhibit an effect for improving the toughness, but an addition thereof exceeding 0.02% lowers creep rupture strength.

Further, oxygen is concerned with high temperature strength, and superior creep rupture strength can be obtained by controlling an amount of $O_2$ in a range from 5 to 25 ppm in the invented steel.

At least one of niobium and tantalum is added in an amount of 0.005 to 0.15%. A content thereof less than 0.005% is not sufficient to exhibit an effect for improving strength, whereas when a content thereof exceeds 0.15% the huge carbides thereof are crystallized in such a large structure as a steam turbine rotor, whereby strength and toughness are lowered, and thus this content is in a range from 0.005 to 0.15%. In particular, preferably the content is in a range from 0.01 to 0.05%.

Tungsten is added in an amount not less than 0.1% to increase strength. This amount must be in a range from 0.1 to 1.0%, because when the amount exceeds 1.0%, a problem of segregation arises in a large steel ingot by which strength is lowered, and preferably the amount is in a range from 0.1 to 0.5%.

A ratio Mn/Ni or a ratio (Si + Mn)/Ni must be not more than 0.12 and not more than 0.18, respectively, whereby Ni-Cr-Mo-V low alloy steel having a bainitic structure is greatly prevented from being subjected to heating embrittlement, with the result that the low alloy steel is applicable to a rotor shaft integrating low and high pressure portions.

The steel having the characteristics superior in both creep rupture strength and high impact value can be obtained by setting a ratio (V + Mo)/(Ni + Cr) to 0.45 to 0.7, whereby blades each having a length not less than 762 mm can be planted on the rotor shaft integrating high and low pressure portions according to the present invention.

The application of the above new material to a rotor shaft enables long blades having a length of not less than 762 mm to be planted on the rotor shaft as final stage blades, and the rotor shaft can be made compact such that a ratio (L/D) of a length (L) thereof between bearings to a blade diameter (D), is made to 1.4 to 2.3, and preferably the ratio is made to 1.6 to 2.0. Further, a ratio of the maximum diameter (d) of the rotor shaft to a length ($\ell$) of final long blades can be made to 1.5 to 2.0. With this arrangement, an amount of steam can be increased to the maximum thereof in accordance with the characteristics of the rotor shaft, whereby a large amount of power can be generated by a small steam turbine. In particular, preferably this ratio is 1.6 to 1.8. A ratio not less than 1.5 is determined from the number of blades, and the greater the ratio, the better the result can be obtained, but preferably the ratio is not more than 2.0 from a view point of strength with respect to a centrifugal force.

A steam turbine using the rotor shaft integrating high and low pressure portions according to the present invention is small in size, and capable of generating power of 100,000 to 300,000 KW and making a distance thereof between bearings very short, i.e., not more than 0.8 m per 10, 000 KW of generated power. Preferably, the distance is 0.25 to 0.6 m per 10,000 KW.

The application of the above Ni-Cr-Mo-V low alloy steel to a rotor shaft integrating high and low pressure portions enables movable blades having a length in particular of not less than 850 mm to be planted at a final stage, whereby an output from a single turbine can be increased and the turbine can be made small in size.

BRIEF DESCRIPTION OF THE INVENTION

Fig. 1 is a partial cross sectional view of a steam turbine using a rotor shaft integrating high and low pressure portions;

Fig. 2 is a graph showing a relationship between ratio (V + Mo)/(Ni + Cr), and creep rupture strength and impact absorption energy;

Fig. 3 is a graph showing a relationship between creep rupture strength and oxygen;

Fig. 4 is a graph showing a relationship between creep rupture strength and Ni; and

Fig 5 to 7 are graphs showing relationships between a V-shaped notch impact absorption energy, and Ni, Mn, Si + Mn, a ratio Mn/Ni, and a ratio (Si + Mn)/Ni.

PREFERRED EMBODIMENTS OF THE INVENTION

EXAMPLE 1

A turbine rotor is described below with reference to examples. Table 1 shows chemical compositions of typical specimens subjected to toughness and creep rapture tests. The specimens were obtained in such a manner that they were melted in a high frequency melting furnace, made to an ingot, and hot forged to a size of 30 mm square at a temperature from 850 to 1150°C. The specimens Nos. 1, 2 and 7 to 11 are materials according to the invention. The specimens Nos. 3 to 6 were prepared for the comparison with the invented materials. The specimen No. 5 is a material corresponding to ASTM A470 Class 8 and the specimen No. 6 is a material corresponding to ASTM A470 Class 7. These specimens were quenched in such a manner that they were made to have austenitic structure by being heated to 950°C in accordance with a simulation of the conditions of the center of a rotor shaft integrating high and low pressure portions of a steam turbine, and then cooled at a speed of 100°C/h. Next, they were annealed by being heated at 665°C for 40 hours and cooled in a furnace. Cr-Mo-V steels according to the invention included no ferrite phase and were made to have a bainite structure as a whole.

An austenitizing temperature of the invented steels must be 900 to 1000°C. When the temperature is less than 900°C, creep rupture strength is lowered, although superior toughness can be obtained. When the temperature exceeds 1000°C, toughness is lowered, although superior creep rupture strength can be obtained. An annealing temperature must be 630 to 700°C. If the temperature is less than 630°C, superior toughness cannot be obtained, and when it exceeds 700°C, superior creep strength cannot be obtained.

Table 2 shows the results of a tensile strength test, impact test, and creep rupture test. Toughness is shown by Charpy impact absorbing energy of a V-shaped notch tested at 20°C. Creep rupture strength is determined by Larson Miller method and shown by a strength obtained when a specimen was heated at 538°C for 100,000 hours. As apparent from Table 2, the invented materials have a tensile strength not less than 863 N/mm$^2$ (88 kgf/mm$^2$) at a room temperature, a 0.2% yield strength not less than 687 N/mm$^2$ (70 kgf/mm$^2$), an FATT not more than 40°C, an impact absorbing energy not less than 2.5 kgf-m both before they were heated and after they had been heated, and a creep rupture strength not less than about 108 N/mm$^2$ (11 kg/mm$^2$), and thus they are very useful for a turbine rotor integrating high and low pressure portions. In particular, a material having a strength not less than 147 N/mm$^2$ (15 kg/mm$^2$) is preferable to plant long blades of 850 mm.

Table 1

| Specimen No. | Composition (wt%) | | | | | | | | | | $\frac{V+Mo}{Ni+Cr}$ | Mn/Ni | $\frac{Si+Mn}{Ni}$ |
|---|---|---|---|---|---|---|---|---|---|---|---|---|---|
| | C | Si | Mn | P | S | Ni | Cr | Mo | V | | | | |
| 1 | 0.29 | 0.08 | 0.18 | 0.012 | 0.012 | 1.85 | 1.20 | 1.21 | 0.22 | – | 0.47 | 0.097 | 0.141 |
| 2 | 0.24 | 0.06 | 0.07 | 0.007 | 0.010 | 1.73 | 1.38 | 1.38 | 0.27 | – | 0.53 | 0.040 | 0.075 |
| 3 | 0.27 | 0.04 | 0.15 | 0.007 | 0.009 | 1.52 | 1.09 | 1.51 | 0.26 | – | 0.68 | 0.099 | 0.125 |
| 4 | 0.30 | 0.06 | 0.19 | 0.008 | 0.011 | 0.56 | 1.04 | 1.31 | 0.26 | – | 0.98 | 0.339 | 0.446 |
| 5 | 0.33 | 0.27 | 0.77 | 0.007 | 0.010 | 0.34 | 1.06 | 1.28 | 0.27 | – | 1.11 | 2.265 | 3.059 |
| 6 | 0.23 | 0.05 | 0.30 | 0.009 | 0.012 | 3.56 | 1.66 | 0.40 | 0.12 | – | 0.10 | 0.084 | 0.098 |
| 7 | 0.31 | 0.07 | 0.15 | 0.007 | 0.009 | 2.00 | 1.15 | 1.32 | 0.22 | – | 0.49 | 0.075 | 0.110 |
| 8 | 0.26 | 0.06 | 0.17 | 0.007 | 0.008 | 1.86 | 1.09 | 1.41 | 0.24 | La+Ce 0.20 | 0.56 | 0.091 | 0.124 |
| 9 | 0.25 | 0.07 | 0.17 | 0.010 | 0.010 | 1.72 | 1.40 | 1.42 | 0.24 | Ca 0.005 | 0.53 | 0.099 | 0.140 |
| 10 | 0.24 | 0.05 | 0.13 | 0.009 | 0.007 | 1.73 | 1.25 | 1.39 | 0.25 | Zr 0.04 | 0.55 | 0.075 | 0.104 |
| 11 | 0.26 | 0.03 | 0.09 | 0.008 | 0.009 | 1.71 | 1.23 | 1.45 | 0.23 | Al 0.01 | 0.57 | 0.052 | 0.070 |
| 12 | 0.29 | 0.09 | 0.23 | 0.013 | 0.009 | 1.70 | 1.06 | 1.32 | 0.25 | – | 0.57 | 0.135 | 0.188 |
| 13 | 0.29 | 0.21 | 0.33 | 0.012 | 0.007 | 1.74 | 1.04 | 1.20 | 0.23 | – | 0.51 | 0.190 | 0.310 |
| 14 | 0.31 | 0.25 | 0.90 | 0.010 | 0.007 | 1.86 | 1.06 | 1.29 | 0.22 | – | 0.52 | 0.484 | 0.618 |

Table 2

Value in parenthesis: after heated at 500°C for 3000 h

| Specimen No. | Tensile strength (kg/mm²) (9.81 N/mm²) | 0.02% yield strength (kg/mm²) (9.81 N/mm²) | Elonga- tion (%) | Contrac- tion of area (%) | Impact absorbing energy (kgf-m) (1 kgf = 9,801 N) | 50% FATT (°C) | 538°C Creep rupture strength (kgf/mm2) (9.81 N/mm²) |
|---|---|---|---|---|---|---|---|
| 1 | 92.4 | 72.5 | 21.7 | 63.7 | 3.5 (3.3) | 30 | 12.5 |
| 2 | 92.5 | 72.6 | 21.3 | 62.8 | 3.3 (3.0) | 39 | 15.6 |
| 3 | 90.8 | 71.4 | 22.5 | 64.0 | 2.8 (2.7) | 38 | 18.4 |
| 4 | 90.8 | 71.9 | 20.4 | 61.5 | 1.2 | 119 | 15.5 |
| 5 | 88.1 | 69.2 | 20.1 | 60.8 | 1.3 | 120 | 14.6 |
| 6 | 72.4 | 60.1 | 25.2 | 75.2 | 12.0 | −20 | 5.8 |
| 7 | 89.9 | 70.3 | 22.3 | 64.5 | 3.6 (3.3) | 29 | 10.8 |
| 8 | 90.8 | 70.7 | 21.9 | 63.9 | 4.2 | 21 | 14.8 |
| 9 | 91.0 | 71.4 | 21.7 | 63.5 | 3.9 | 25 | 15.1 |
| 10 | 92.0 | 72.2 | 20.9 | 62.2 | 3.7 | 34 | 15.6 |
| 11 | 90.6 | 71.1 | 21.5 | 61.8 | 3.7 | 36 | 15.5 |
| 12 | — | — | — | — | 3.0 (2.4) | — | — |
| 13 | — | — | — | — | 3.4 (2.4) | — | — |
| 14 | — | — | — | — | 3.6 (2.3) | — | — |

EP 0 761 836 B1

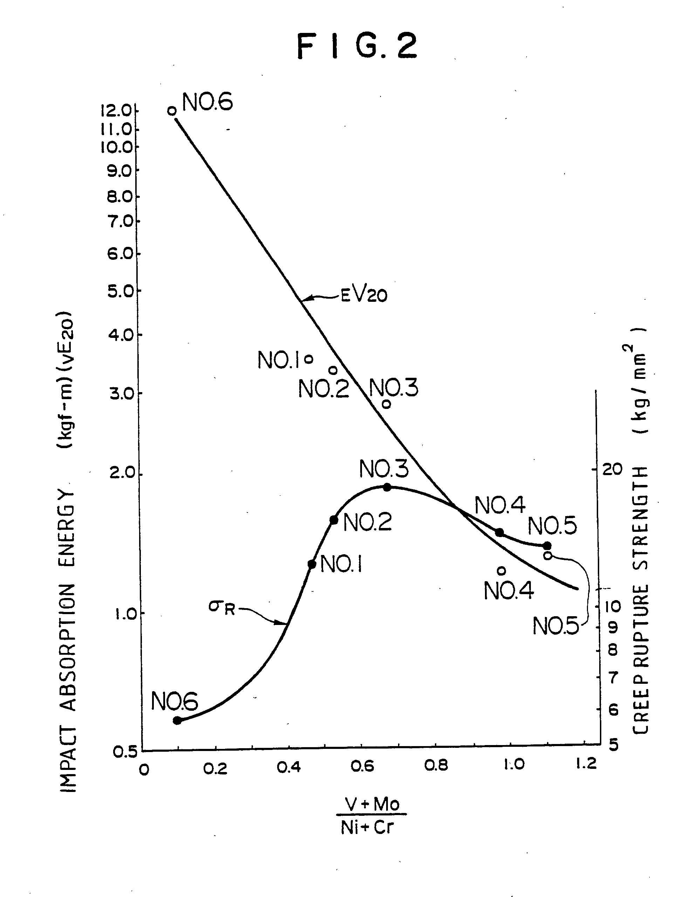

Fig. 2 shows a relationship between a ratio of a sum of V and Mo acting as carbide creating elements to a sum of Ni and Cr acting as quenching ability improving elements, and creep rupture strength and impact absorbing energy. The creep rupture strength $\sigma R$ is increased as the component ratio (V + Mo)/(Ni + Cr) is increased until it becomes about 0.7. It is found that the impact absorbing energy is lowered as the component ratio is increased. It is found that a toughness vE20 $\geqq$ (2.5 kgf·m) and a creep rupture strength $\sigma R \geqq 108$ N/mm$^2$ (11 kgf/mm$^2$) is necessary as the characteristics of a material forming the turbine rotor integrating high and low pressure portions are obtained when (V + Mo)/(Ni + Cr) = 0.45 to 0.7. Further, to examine the brittle characteristics of the invented material No. 2 and the comparative material Nos. 5 (corresponding to a material currently used to a high pressure rotor) and 6 (corresponding to a material currently used to a low pressure rotor), an impact test was effected to specimens before subjected to a brittle treatment for 3000 h at 500°C and those after subjected to the treatment and a 50% fracture appearance transition temperature (FATT) was examined. An FATT of the comparative material No. 5 was increased (made brittle) from 119°C to 135°C ($\Delta$FATT = 16°C), an FATT of the material No. 6 was increased from -20°C to 18°C ($\Delta$FATT = 38°C) by the brittle treatment, whereas it was also confirmed that an FATT of the invented material No. 3 remained at 38°C before and after the brittle treatment and thus it was confirmed that this material was not made brittle.

The specimens Nos. 8 to 11 of the invented materials added with rare earth elements (La - Ce), Ca, Zr, and Al, respectively, have toughness improved by these rare earth elements. In particular, the addition of the rare earth elements is effective to improve the toughness. A material added with Y in addition to La - Ce was also examined and it was confirmed that Y was very effective to improve the toughness.

Table 3 shows the chemical compositions and creep rapture strength of the specimens prepared to examine an influence of oxygen to creep rapture strength of the invented materials. A method of melting and forging these specimens were the same as that of the above-mentioned specimens Nos. 1 to 11.

Table 3

| Specimen No. | Composition (wt%) | | | | | | | | | |
|---|---|---|---|---|---|---|---|---|---|---|
| | C | Si | Mn | P | S | Ni | Cr | Mo | V | O |
| 15 | 0.26 | 0.05 | 0.08 | 0.008 | 0.011 | 1.71 | 1.24 | 1.37 | 0.25 | 0.0004 |
| 16 | 0.23 | 0.04 | 0.10 | 0.009 | 0.011 | 1.60 | 1.24 | 1.37 | 0.25 | 0.0014 |
| 17 | 0.25 | 0.05 | 0.09 | 0.010 | 0.012 | 1.61 | 1.25 | 1.36 | 0.24 | 0.0019 |
| 18 | 0.24 | 0.05 | 0.12 | 0.008 | 0.010 | 1.65 | 1.20 | 1.38 | 0.24 | 0.0030 |
| 19 | 0.25 | 0.04 | 0.11 | 0.009 | 0.010 | 1.69 | 1.29 | 1.29 | 0.23 | 0.0071 |
| 20 | 0.23 | 0.06 | 0.09 | 0.010 | 0.012 | 1.72 | 1.30 | 1.32 | 0.25 | 0.0087 |

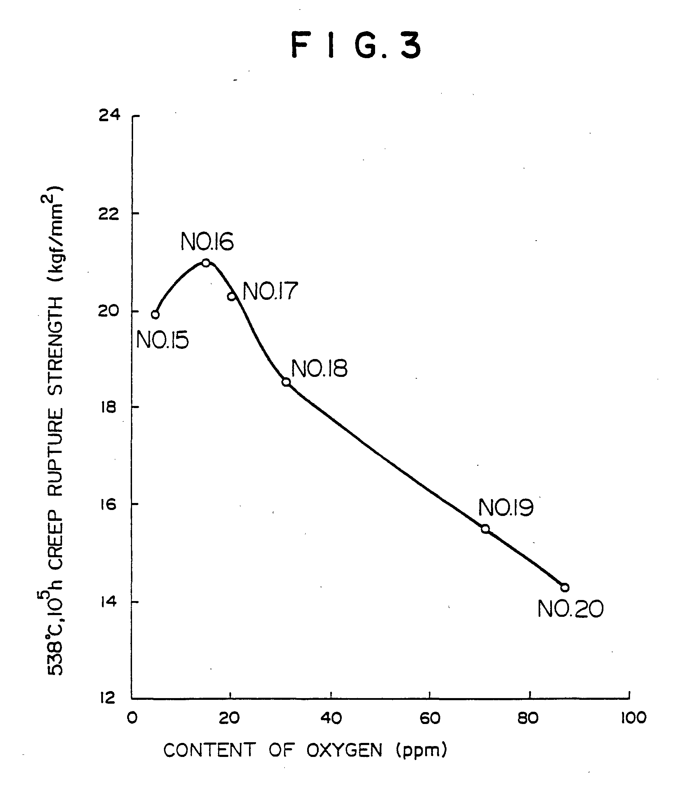

The specimens were quenched in such a manner that they were austenitized by being heated to 950°C and then by being cooled at a speed of 100°C/h. Next, they were annealed by being heated at 660°C for 40 hours. Table 4 shows 538°C creep rapture strength in the same manner as that shown in Table 2. Fig. 3 is a graph showing a relationship between the 538°; 100 000 n creep rupture strength and oxygen. It is found that a superior creep rupture strength not less than about 118 N/mm$^2$ (12 kgf/mm$^2$) can be obtained by making O$_2$ to a level not more than 100 ppm, further, a superior creep rupture strength not less than 147 N/mm$^2$ (15 kgf/mm$^2$) can be obtained by making O$_2$ level thereof be not more than 80 ppm, and furthermore, a superior creep rupture strength not less than 176 N/mm$^2$ (18 kgf/mm$^2$) can be obtained by making O$_2$ level thereof be not more than 40 ppm.

Table 4

| Specimen No. | $\dfrac{Mn}{Ni}$ | $\dfrac{Si+Mn}{Ni}$ | $\dfrac{V+Mo}{Ni+Cr}$ | Creep rupture strength (kgf/mm$^2$) (9,81 N/mm$^2$) |
|---|---|---|---|---|
| 15 | 0.047 | 0.076 | 0.55 | 19.9 |
| 16 | 0.063 | 0.088 | 0.57 | 21.0 |
| 17 | 0.056 | 0.087 | 0.56 | 20.3 |
| 18 | 0.073 | 0.103 | 0.57 | 18.5 |
| 19 | 0.065 | 0.089 | 0.51 | 15.6 |
| 20 | 0.052 | 0.087 | 0.52 | 14.3 |

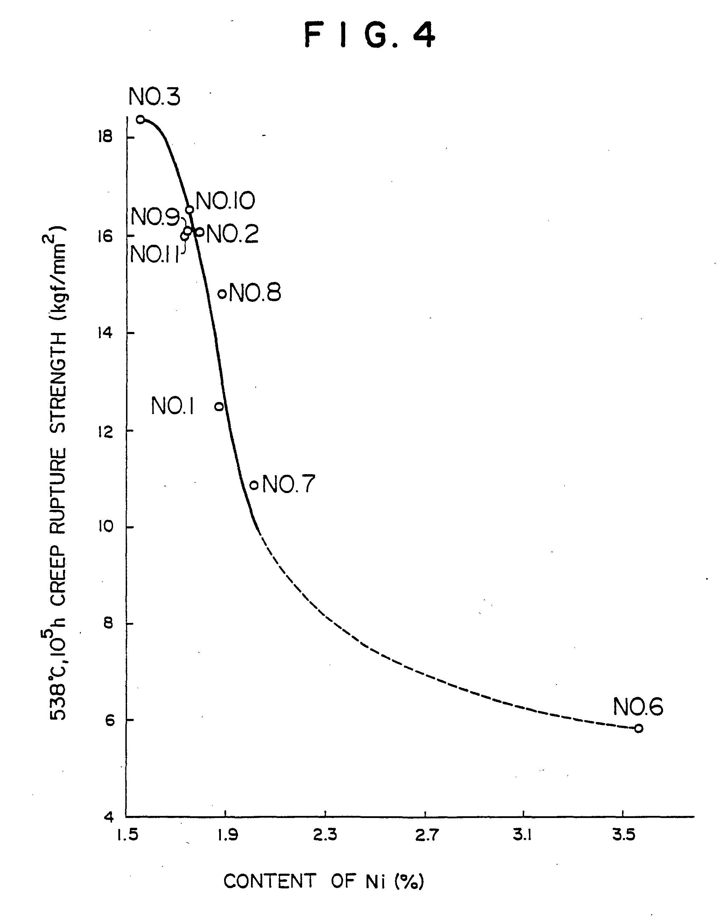

Fig 4 is a graph showing a relationship between 538°C, 10$^5$ hour creep rupture strength and an amount of Ni. As shown in Fig 4, the creep rupture strength is abruptly lowered as an amount of Ni is increased. In particular, a creep rupture strength not less than about 108 N/mm$^2$ (11 kgf/mm$^2$) is exhibited when an amount of Ni is not more-than about 2%, and in particular, a creep rupture strength not less than about 118 N/mm$^2$ (12 kgf/mm$^2$) is exhibited when an amount of Ni is not more than 1.9%.

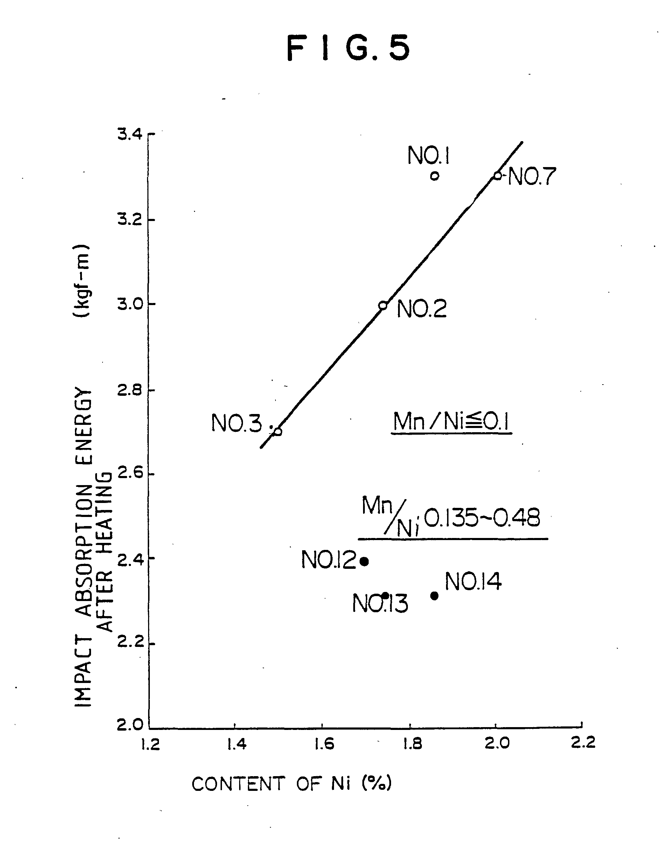

Fig 5 is a graph showing a relationship between an impact absorption energy and an amount of Ni after the specimens have been heated at 500°C for 3,000 hours. As shown in Fig 5, the specimens of the present invention in which a ratio (Si + Mn)/Ni is not more than 0.18 or in which another ratio Mn/Ni is not more than 0.1 can bring about high impact absorption energy by the increase in an amount of Ni, but the comparative specimens Nos. 12 to 14 in which a ratio (Si + Mn)/Ni exceeds 0.18 or in which another ratio Mn/Ni exceeds 0.12 have a low impact absorption energy not more than 2.4 kgf-m, and thus an increase in the amount of Ni is little concerned with the impact absorption energy.

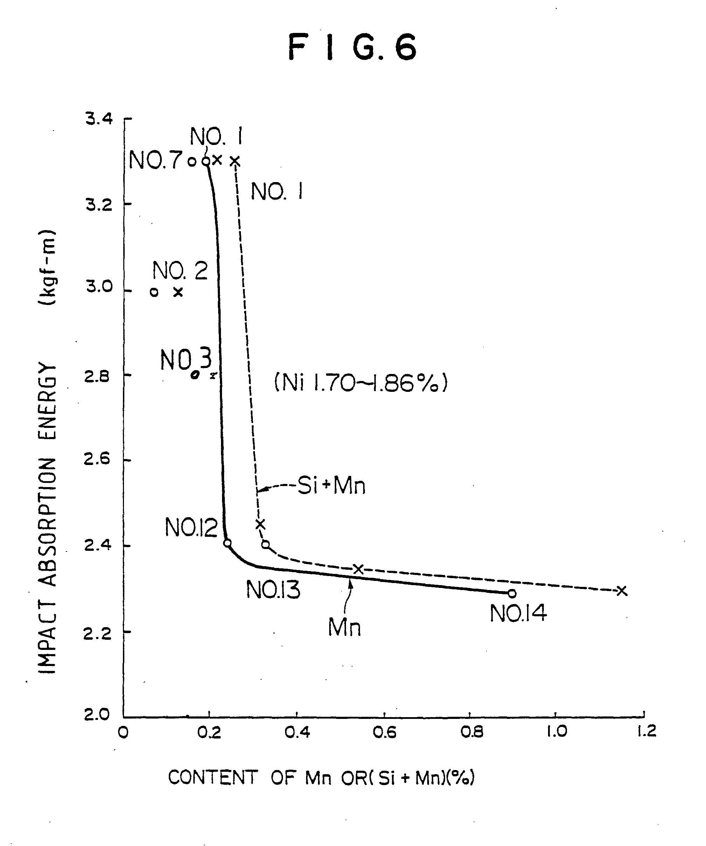

Likewise, Fig 6 is a graph showing a relationship between impact absorption energy after being subjected to heating embrittlement and an amount of Mn or an amount of Si + Mn of the specimens containing 1.6 to 1.9% of Ni. As shown in Fig 6, it is apparent that Mn or (Si + Mn) greatly influences the impact absorption energy at a particular amount of Ni. That is, the specimens have a very high impact absorption energy when an amount of Mn is not more than 0.2% or an amount of Si + Mn is not more than 0.25%.

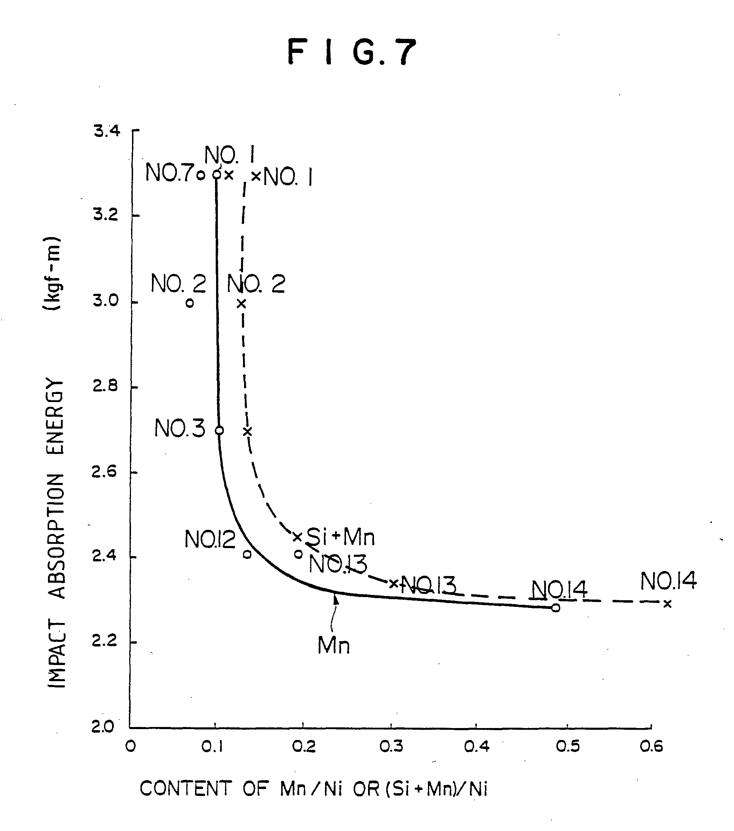

Likewise, Fig. 7 is a graph showing a relationship between an impact absorption energy and a ratio Mn/Ni or a ratio (Si + Mn)/Ni of the specimens containing 1.52 to 2.0% Ni. As shown in Fig. 7, a high impact absorption energy not less than 2.5kgf-m is exhibited when a ratio Mn/Ni is not more than 0.12 or a ratio Si + Mn/Ni is not more than 0.18.

EXAMPLE 2

Table 5 shows typical chemical compositions (wt%) of specimens used in an experiment.

The specimens were obtained in such a manner that they were melted in a high frequency melting furnace, made to an ingot, and hot forged to a size of 30 mm square at a temperature from 850 to 1250°C. The specimens Nos. 21 and 22 were prepared for the comparison with the invented materials. The specimens Nos. 23 to 32 are rotor materials superior in toughness according to the present invention.

The specimens Nos. 23 to 32 were quenched in such a manner that they were austenitized being heated to 950°C in accordance with a simulation of the conditions of the center of a rotor shaft integrating high and low pressure portions of a steam turbine, and then cooled at a speed of 100°C/h. Next, they were annealed by being heated at 650°C for 50 hours and cooled in a furnace. The Ni-Cr-Mo-V steel according to the invention included no ferrite phase and was made to have a bainite structure as a whole.

An austenitizing temperature of the invented steels must be 900 to 1000°C. When the temperature was less than 900°C, creep rupture strength was lowered, although superior toughness can be obtained. When the temperature exceeded 1000°C, toughness was lowered, although superior creep rapture strength was obtained. An annealing temperature must be 630 to 700°C. If the temperature is less than 630°C superior toughness cannot be obtained, and when it exceeds 700°C, superior creep strength cannot be obtained.

Table 6 shows the results of a tensile strength test, impact test, and creep rupture test. Toughness is shown by Charpy impact absorbing energy of a V-shaped notch tested at 20°C and 50% fracture transition temperature (FATT).

The creep rupture test by a notch was effected using specimens each having a notch bottom radius of 66 mm, a notch outside diameter of 9 mm, and a V-shaped notch configuration of 45° (a radius of a notch bottom end) "r" is 0.16 mm).

Table 5

| Speci-men No. | Composition (wt%) | | | | | | | | | | | | (ppm) O₂ | V+Mo / Ni+Cr | Mn / Ni |
|---|---|---|---|---|---|---|---|---|---|---|---|---|---|---|---|
| | C | Si | Mn | P | S | Ni | Cr | Mo | W | V | Nb | Others | | | |
| 21 | 0.26 | 0.27 | 0.77 | 0.007 | 0.010 | 0.34 | 1.06 | 1.28 | – | 0.27 | – | – | 26 | 1.107 | 2.26 |
| 22 | 0.23 | 0.05 | 0.30 | 0.009 | 0.012 | 3.56 | 1.66 | 0.40 | – | 0.12 | – | – | 20 | 0.100 | 0.084 |
| 23 | 0.25 | 0.02 | 0.15 | 0.003 | 0.004 | 1.64 | 1.95 | 1.40 | – | 0.27 | – | – | 19 | 0.465 | 0.092 |
| 24 | 0.24 | 0.02 | 0.16 | 0.001 | 0.006 | 1.70 | 1.51 | 1.68 | – | 0.27 | 0.03 | – | 10 | 0.607 | 0.094 |
| 25 | 0.23 | 0.03 | 0.15 | 0.002 | 0.005 | 1.65 | 1.60 | 1.61 | 0.21 | 0.25 | – | – | 19 | 0.572 | 0.091 |
| 26 | 0.24 | 0.02 | 0.15 | 0.001 | 0.007 | 1.69 | 1.52 | 1.60 | 0.23 | 0.25 | 0.03 | – | 20 | 0.576 | 0.089 |
| 27 | 0.22 | 0.04 | 0.16 | 0.009 | 0.009 | 1.63 | 1.65 | 1.60 | 0.26 | 0.26 | – | Ti 0.03 B 0.004 | 21 | 0.567 | 0.098 |
| 28 | 0.24 | 0.06 | 0.15 | 0.005 | 0.007 | 1.65 | 1.57 | 1.68 | – | 0.23 | 0.05 | Ca 0.006 | 18 | 0.593 | 0.091 |
| 29 | 0.26 | 0.03 | 0.15 | 0.008 | 0.011 | 1.58 | 1.49 | 1.70 | – | 0.25 | 0.04 | La 0.08 Ce 0.09 | 16 | 0.633 | 0.094 |
| 30 | 0.23 | 0.05 | 0.14 | 0.006 | 0.008 | 1.71 | 1.51 | 1.65 | 0.27 | 0.25 | – | Al 0.006 | 16 | 0.590 | 0.082 |
| 31 | 0.26 | 0.08 | 0.13 | 0.007 | 0.006 | 1.80 | 1.50 | 1.73 | – | 0.24 | – | Ta 0.06 | 17 | 0.597 | 0.072 |
| 32 | 0.25 | 0.04 | 0.13 | 0.009 | 0.009 | 1.46 | 1.61 | 1.63 | 0.14 | 0.25 | – | Zr 0.31 | 15 | 0.612 | 0.089 |

EP 0 761 836 B1

Table 6

| Specimen No. | Tensile strength (kg/mm²) (9.81 N/mm²) | Elongation (%) | Contraction of area (%) | Impact absorbing energy (kgf-m) | 50% FATT (°C) | 538°C Creep rupture strength (kgf/mm²) |
|---|---|---|---|---|---|---|
| 21 | 88.1 | 20.1 | 60.8 | 1.3 | 120 | 14.0 |
| 22 | 72.4 | 25.2 | 75.2 | 12.0 | −20 | 6.5 |
| 23 | 88.9 | 21.4 | 70.7 | 8.7 | 35 | 17.5 |
| 24 | 89.0 | 21.9 | 71.3 | 9.5 | 28 | 18.9 |
| 25 | 88.1 | 23.1 | 73.0 | 5.8 | 39 | 19.2 |
| 26 | 88.3 | 21.8 | 72.3 | 7.2 | 34 | 18.3 |
| 27 | 89.5 | 21.5 | 71.4 | 10.6 | 5 | 19.1 |
| 28 | 88.2 | 22.2 | 72.5 | 11.7 | −2 | 18.8 |
| 29 | 88.5 | 22.7 | 72.8 | 13.7 | −9 | 19.2 |
| 30 | 91.8 | 20.0 | 70.2 | 10.7 | 3 | 18.4 |
| 31 | 91.3 | 20.1 | 70.2 | 11.8 | −3 | 19.3 |
| 32 | 90.8 | 20.6 | 70.6 | 10.8 | 0 | 18.5 |

Creep rupture strength is determined by a Larson Mirror method and shown by strength obtained when a specimen was heated at 538°C for $10^5$ hours. As apparent from Table 6, the invented materials have a tensile strength not less than 863 N/mm$^2$ (88 kgf/mm$^2$) at a room temperature, an impact absorbing energy not less than 49 N/mm$^2$ (5 kgf/mm$^2$), a 50% FATT not more than 40°C, and a creep rupture strength of 167 N/mm$^2$ (17 kgf/mm$^2$), and thus they are very useful for a turbine rotor integrating high and low pressure portions.

These invented steels have greatly improved toughness as compared with that of the material (specimen No. 21) corresponding to a material currently used to a high pressure rotor (having a high impact absorbing energy and a low FATT). Further, they have a 538°C, $10^5$ hour notch creep rupture strength superior to that of the material (specimen No. 22) corresponding to a material currently used to a low pressure rotor.

In the relationship between a ratio of a sum of V and Mo as carbide creating elements to a sum of Ni and Cr as quenching ability improving elements, and creep rupture strength and impact absorbing energy, the creep rupture strength is increased as the component ratio (V + Mo)/(Ni + Cr) is increased until it becomes about 0.7. The impact absorbing energy is lowered as the component ratio is increased. The toughness vE20 > 2.5 kgf-m and the creep rupture strength R > 108 N/mm$^2$ (11 kgf/mm$^2$) necessary as the turbine rotor integrating high and low pressure portions are obtained when (V + Mo)/(Ni + Cr) is made to be in the range of 0.45 to 0.7. Further, to examine brittle characteristics of the invented materials and the comparative material No. 21 (corresponding to a material currently used to a high pressure rotor) and the comparative material No. 22 (corresponding to a material currently used to a low pressure rotor), an impact test was effected to specimens before subjected to a brittle treatment at 500°C for 3000 h and those after subjected to the treatment and a 50% fracture transition temperature (FATT) was examined. As a result, an FATT of the comparative material No. 21 was increased (made brittle) from 119°C to 135°C (ΔFATT = 16°C), an FATT of the material, No. 2 was increased from -20°C to 18°C (ΔFATT = 38°C) by the brittle treatment, whereas it was also confirmed that an FATT of the invented materials were 39°C both before and after subjected to the brittle treatment and thus it was confirmed that they were not made brittle.

The specimens Nos. 27 to 32 of the invented materials added with rare earth elements (La - Ce), Ca, Zr, and Al, respectively, have toughness improved thereby. In particular, an addition of the rare earth elements is effective to improve the toughness. A material added with Y in addition to La - Ce was also examined and it was confirmed that Y was very effective to improve the toughness.

As a result of an examination of an influence of oxygen to creep rupture strength of the invented materials, it is found that a superior strength not less than about 118 N/mm$^2$ (12 kgf/mm$^2$) can be obtained by making $O_2$ to be in a level not more than 100 ppm, further, a superior strength not less than 147 N/mm$^2$ (15 kgf/mm$^2$) can be obtained at a level thereof not more than 80 ppm, and, furthermore, a superior strength not less than 177 N/mm$^2$ (18 kgf/mm$^2$) can be obtained at a level thereof not more than 40 ppm.

As a result of an examination of the relationship between 538°C, $10^5$ hour creep rupture strength and an amount of Ni, it is found that the creep rupture strength is abruptly lowered as an amount of Ni is increased. In particular, a strength not less than about 108 N/mm$^2$ (11 kgf/mm$^2$) is exhibited when an amount of Ni is not more than about 2%, and in particular, a strength not less than about 118 N/mm$^2$ (12 kgf/mm$^2$) is exhibited when an amount of Ni is not more than 1.9%.

Further, as a result of an examination of a relationship between impact value and an amount of Ni after the specimens have been heated at 500°C for 3000 hours, the specimens according to the present invention in which the ratio (Si + Mn)/Ni is not more than 0.18 bring about high impact values by the increase in an amount of Ni, but the comparative specimens in which the ratio (Si + Mn)/Ni exceeds 0.18 have a low impact value not more than 23.5 N/mm$^2$ (2.4 kgf/mm$^2$) and thus an increase in the amount of Ni is little concerned with the impacts value.

As a result of an examination of a relationship between impact value and an amount of Mn or an amount of Si + Mn of the specimens containing 1.6 to 1.9% of Ni, it is found that Mn or Si + Mn greatly influences the impact value at a particular amount of Ni, and the specimens have a very high impact value when an amount of Mn is not more than 0.2% or an amount of Si + Mn is in a range from 0.07 to 0.25%.

As a result of an examination of a relationship between impact value and a ratio Mn/Ni or a ratio (Si + Mn)/Ni of the specimens containing 1.52 to 2.0% of Ni, a high impact value not less than 25 N/mm$^2$ (2.5 kgf/mm$^2$) is exhibited when the ratio Mn/Ni is not more than 0.12 or the ratio (Si + Mn)/Ni is in a range from 0.04 to 0.18.

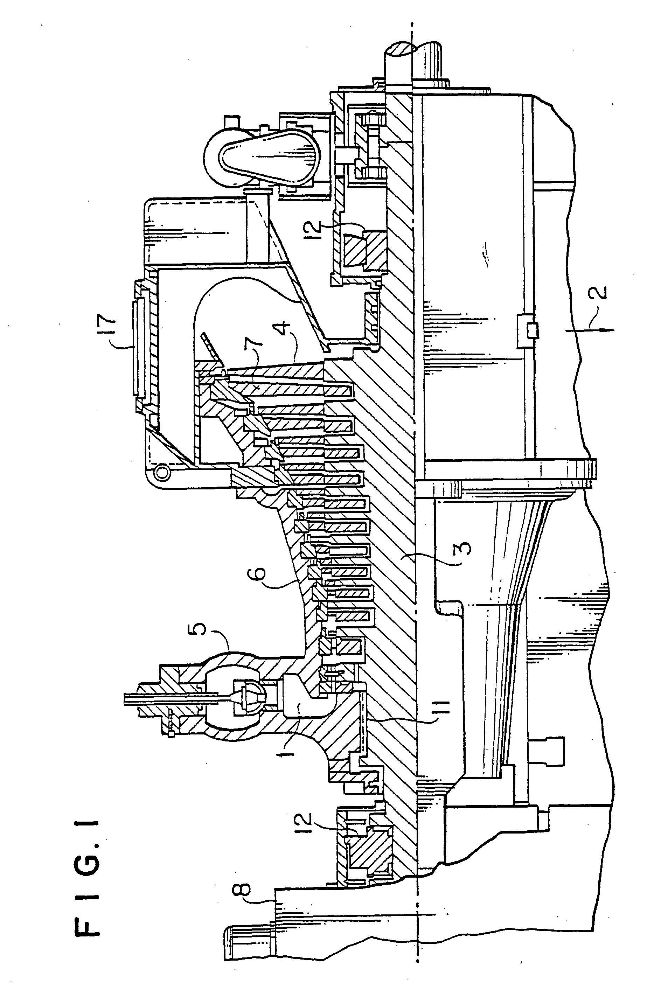

Fig. 1 shows a partial cross sectional view of a steam turbine integrating high and low pressure portions . A conventional steam turbine consumes high pressure and temperature steam of 80 at and 480°C at the main steam inlet thereof and low temperature and pressure steam of 722 mmHg and 33°C at the exhaust portion thereof by a single rotor thereof, whereas the steam turbine integrating high and low pressure portions of the invention can increase an output of a single turbine by increasing a pressure and temperature of steam at the main steam inlet thereof to 100 at and 536°C, respectively. To increase an output of the single turbine, it is necessary to increase a blade length of movable blades at a final stage and to increase a flow rate of steam. For example, when a blade length of the movable blade at a final stage is increased from 660 to 850 mm, an ring-shaped band area is increased by about 1.7 times. Consequently, a conventional output of 100 MW is increased to 170 MW, and further when a blade length is increase to 1016 mm, an output per a single turbine can be increased by 2 times or more.

When a Cr-Mo-V steel containing 0.5% of Ni is used for a rotor integrating high and low pressure "portions as a material of the rotor shaft having blades of a length not less than 850 mm, this rotor material can sufficiently withstand an increase in a steam pressure and temperature at the main stream inlet thereof, because this steel is superior in high temperature strength and creep characteristics to be thereby used at a high temperature region. In the case of a long blade of 660 mm, however, tangential stress in a low temperature region, in particular, tangential stress occurring at the center hole of the turbine rotor at a final stage movable blade portion is about 0.95 in a stress ratio (operating stress/allowable stress) when the rotor is rotated at a rated speed, and in the case of a long blade of 850 mm, the tangential stress is about 1.1 in the stress ratio, so that the above steel is intolerable to this application.

On the other hand, when 3.5% Ni-Cr-Mo-V steel is used as a rotor material, the above stress ratio thereof is about 0.96 even when long blades of 850 mm are used, because this material has toughness in the low temperature region, and tensile strength and yield strength which are 14% higher than those of the Cr-Mo-V steel. However, if longer blades of 1016 mm are used, the above stress ratio is 1.07, and thus this rotor material is intolerable to this application. Since this material has creep rupture stress in the high temperature region which is about 0.3 times that of the CR-Mo-V steel and thus it is intolerable to this application due to lack of high temperature strength.

To increase an output as described above, it is necessary to provide a rotor material which simultaneously has both superior characteristics of the Cr-Mo-V steel in a high temperature region and superior characteristics of the Ni-Cr-Mo-V steel in a low temperature region.

When a long blade of a class from 762 to 1016 mm is used, a material having a tensile strength not less than 863 N/mm$^2$ (88 kgf/mm$^2$) is necessary, because conventional Ni-Cr-Mo-V steel (ASTM A470 Class 7) has the stress ratio of 1.07, as described above.

Further, a material of a steam turbine rotor integrating high and low pressure portions on, which long blades not less than 762 mm are attached must have a 538°C, 10$^5$ h creep rupture strength not less than 147 N/mm$^2$ (15 kgf/mm$^2$) from a view point of securing safety against high temperature breakdown on a high pressure side, and an impact absorbing energy not less than 2.5 kgfm from a view point of securing safety against breakdown due to brittleness on a low pressure side.

From the above view point, in the invention there was obtained heat resisting steels which can satisfy the above requirements and which increase an output per a single turbine.

The steam turbine shown in Figure 1 includes thirteen stages of blades 4 planted on a rotor shaft 3 integrating high and low pressure portions, and steam having a high temperature and pressure of 538°C and 88 at, respectively, is supplied from a steam inlet 1 through a steam control valve 5. The steam flows in one direction from the inlet 1 with the temperature and pressure thereof being decreased to 33°C and 722 mm Hg, respectively and then discharged from an outlet 2 through final stage blades 4. Since the rotor shaft 3 integrating high and low pressure portions is exposed to a steam temperature ranging from 538°C to 33°C, forged steel composed of Ni-Cr-Mo-V low alloy steel having the characteristics describedin the example 1 is used. The portions of the rotor shaft 3 where the blades 4 are planted are formed to a disk shape by integrally machining the rotor shaft 3. The shorter the blade is, the longer the disk portion, whereby the vibration thereof is reduced.

The rotor shaft 3 according to claim 3 of the according to the present invention, was manufactured in such a manner that cast ingot having the alloy compositions of the specimen No. 16 shown in the example 1 and the specimen No. 24 shown in the example 2, respectively was electro-slug remelted, forged to a shaft having a diameter of 1.2 m, heated at 950°C for 10 hours, and then the shaft was cooled at a cooling speed of 100°C/h by spraying water while the it is rotated. Next, the shaft was annealed by being heated at 665°C for 40 hours. A test piece cut from the center of the rotor shaft was subjected to a creep test, an impact test of a V-shaped notch (a cross sectional area of the specimen: 0.8 cm$^2$) before the specimen was heated and after it had been heated (after it had been heated at 500°C for 300 hours), and a tensile strength test, and values substantially similar to those of the examples 1 and 2 were obtained.

Each portion of the present examples are fabricated from a material having the following composition.

The rotor shaft integrating high and low pressure portions according to the present invention was also able to be applied to a single flow type steam turbine in which a part of steam of an intermediate pressure portion of a rotor shaft was used as a heat source for a heater and the like. The materials used in the example 3 were used regarding the rotor shaft.

**Claims**

1. Heat resisting Ni-Cr-Mo-V low alloy steel having a bainitic structure and consisting of, in weight-%,

    0.20 to 0.28 % carbon

≤ 0.10 % silicon
0.05 to 0.25 % manganese
1.6 to 2.0 % nickel
1.2 to 2.5 % chromium
1.2 to 2.0 % molybdenum
0.2 to 0.3 % vanadium
a ratio Mn/Ni ≤ 0.12 and/or
a ratio (Mn+Si)/Ni ≤ 0.18, and
a ratio (V + Mo)/(Ni + Cr) = 0.45 to 0.7,

optionally:

0.001 to 0.1 % in total of at least one element selected from the group consisting of titanium, boron, aluminium, zirconium, calcium and rare earth elements,

0.005 to 0.15 % of at least one element selected from the group consisting of niobium and tantalum,

0.1 to 1.0 % tungsten,

the balance being iron and incidental impurities.

2. Alloy steel according to claim 1, comprising not more than 100 ppm oxygen.

3. Rotor shaft of a steam turbine consisting of the heat resisting Ni-Cr-Mo-V low alloy steel according to claim 1 or 2.

**Patentansprüche**

1. Hitzebeständiger, niedrig legierter Ni-Cr-Mo-V-Stahl mit Bainitgefüge, der in Gew.-% aus

0,20 bis 0,28 % Kohlenstoff,
≤ 0,10 % Silicium,
0,05 bis 0,25 % Mangan,
1,6 bis 2,0 % Nickel
1,2 bis 2,5 % Chrom,
1,2 bis 2,0 % Molybden,
0,2 bis 0,3 % Vanadium besteht, wobei
das Verhältnis Mn/Ni ≤ 0,12 und/oder
das Verhältnis (Mn + Si) / Ni ≤ 0,18 und
das Verhältnis (V + Mo) / (Ni + Cr) = 0,45 bis 0,7 gelten, wahlweise

insgesamt 0,001 bis 0,1 % mindestens eines aus der aus Titan, Bor, Aluminium, Zirkon, Calcium und Seltenerdelementen bestehenden Gruppe ausgewählten Elements,
0,005 bis 0,15 % mindestens eines aus der aus Niobium und Tantal bestehenden Gruppe ausgewählten Elements und
0,1 bis 1,0 % Wolfram enthalten sind und
der Rest Eisen und zufällige Verunreinigungen sind.

2. Stahllegierung nach Anspruch 1, die nicht mehr als 100 ppm Sauerstoff enthält.

3. Rotorwelle einer Dampfturbine, die aus dem hitzebeständigen, niedrig legierten Ni-Cr-Mo-V-Stahl nach Anspruch 1 oder 2 besteht.

**Revendications**

1. Acier faiblement allié de Ni-Cr-Mo-V résistant à la chaleur, ayant une structure bainitique, et constitué, en pourcentage en poids, de

0,20 à 0,28 % de carbone,
≤ 0,10 % de silicium,
0,05 à 0,25 % de manganèse
1,6 à 2,0 % de nickel
1,2 à 2,5 % de chrome
1,2 à 2,0 % de molybdène
0,2 à 0,3 % de vanadium
un rapport Mn/Ni ≤ 0,12, et/ou
un rapport (Mn + Si)/Ni ≤ 0,18, et
un rapport (V + Mo)/(Ni + Cr) = 0,45 à 0,7,

de manière facultative :

0,001 à 0,1 % au total d'au moins un élément sélectionné parmi le groupe constitué de titane, bore, aluminium, zirconium, calcium et éléments des terres rares,
0,005 à 0,15 % d'au moins un élément sélectionné parmi le groupe constitué de niobium et tantale,
0,1 à 1,0 % de tungstène,
le reste étant du fer et des impuretés accidentelles.

2.  Acier allié selon la revendication 1, ne comportant pas plus de 100 ppm d'oxygène.

3.  Arbre de rotor d'une turbine à vapeur constitué de l'acier faiblement allié de Ni-Cr-Mo-V résistant à la chaleur selon la revendication 1 ou 2.

F I G. 1

# F I G. 2

# F I G. 3

# F I G. 4

# F I G. 5

# F I G. 6

# F I G. 7